# EUROPÄISCHE PATENTSCHRIFT

(11) **EP 1 652 635 B1**
(45) Veröffentlichungstag und Bekanntmachung des Hinweises auf die Patenterteilung: **06.01.2016**
(21) Anmeldenummer: 05023245.3
(22) Anmeldetag: 25.10.2005
(51) Int. Cl.: B25J 17/00, B23P 19/00, B64F 5/00, B25J 15/00, B25J 15/06

(54) **Vorrichtung zur Bearbeitung von Bauteilen für Verkehrsmittel, insbesondere zur Bearbeitung von Sektionen für Luftfahrzeuge**
Device for processing structural components for transport means, especially for processing sections of aircrafts
Dispositif de traitement des composants pour moyens de transport, notamment de traitement des sections d'avions

(30) Priorität: 26.10.2004 DE 102004051915
(43) Veröffentlichungstag der Anmeldung: 03.05.2006
(73) Patentinhaber: Airbus Operations GmbH, 21129 Hamburg (DE)
(72) Erfinder: Linnemann, Henrik, 22607 Hamburg (DE); Frauen, Holger, 21129 Hamburg (DE); Gnauck, Thomas, 21629 Neu Wulmstorf (DE); Klemkow, Eike, 19063 Schwerin (DE); Ende, Wolfgang, 21629 Neu Wulmstorf (DE); Neuhaus, Frank, 21635 Jork (DE)
(74) Vertreter: Maiwald Patentanwalts GmbH

(56) Entgegenhaltungen:
- EP-A- 1 151 813
- EP-A1- 0 442 803
- WO-A-03/049899
- WO-A-2005/046931
- DE-A1- 4 124 078
- FR-A- 2 722 437
- US-A- 4 613 262
- US-A- 5 383 751
- US-A- 6 036 409
- US-B1- 6 413 022

## Beschreibung

Die Erfindung betrifft eine Vorrichtung zur Bearbeitung von Bauteilen für Verkehrsmittel, insbesondere zur Bearbeitung von Sektionen für Luftfahrzeuge, mit einem einen Halterahmen tragenden Handhabungssystem, wobei der Halterahmen mindestens einen Druckstempel und/oder mindestens eine Bearbeitungseinrichtung aufweist.

Bekannte Vorrichtungen zur Bearbeitung von Bauteilen umfassen beispielsweise unter anderem ein als Industrieroboter ausgebildetes Handhabungssystem mit einem in mehreren Achsen positionierbaren Gelenkarm an dem ein Werkzeug, zum Beispiel eine Bohrvorrichtung, eine Nietvorrichtung oder dergleichen, angeordnet ist. Mittels des Industrieroboters kann die Bohrvorrichtung dann an den zu bearbeitenden Bereich des Bauteils herangeführt werden. Soll beispielsweise eine Bohrung in das zu bearbeitende Bauteil eingebracht werden, so muss der Gelenkarm des Industrieroboters eine ausreichend große mechanische Kraft auf die Bohrvorrichtung ausüben, um die Kontaktverhältnisse zwischen dem Bauteil und dem Werkzeug den Anforderungen des Bearbeitungsprozesses entsprechend aufrecht zu erhalten. Diese mechanische Kraft wirkt jedoch über den Gelenkarm zumindest teilweise auf den Industrieroboter zurück. Hieraus ergibt sich insbesondere bei großen Werkstücken das konstruktive Erfordernis, den Gelenkarm bzw. die gesamte Mechanik des Industrieroboters mechanisch sehr steif und fest auszubilden, um die erforderliche Positionierungsgenauigkeit des Werkzeugs in Bezug auf das Bauteil auch bei großen Vorschubkräften und in Anbetracht langer Hebelarme sicherzustellen. Die hiernach erforderliche steife und feste mechanische Ausbildung des Gelenkarms bzw. des ganzen Handhabungssystems bedingt im Allgemeinen eine aufwändige, kostenintensive und sperrige Konstruktion. Dem zu bearbeitenden Bauteil muss während des Bearbeitungsprozesses gleichfalls eine ausreichende Festigkeit gegeben werden, was insbesondere bei großformatigen Bauteilen zu einem erhöhten bauteilseitigen Aufwand durch die erforderlichen Aussteifungen etc. führt.

Aus dem Stand der Technik ist beispielsweise FR 2 722 437 bekannt, in der eine Vorrichtung zum Vernieten von metallischen Blechen vorgeschlagen wird, die aus zwei korrespondierenden und magnetisch einander anziehenden Vorrichtungshälften besteht, welche beidseitig der zu vernietenden Bleche angeordnet werden, wobei die Vorrichtung erst durch einen um den gesamten Bearbeitungsbereich des Bauteils herum laufenden Rahmen einer automatischen Positionierung zugänglich gemacht wird, sobald die innere Vorrichtungshälfte manuell positioniert ist. Aus US 5 383 751 ist eine nur manuell positionierbare Bohrmaschine bekannt, die mit mehreren ausfahrbaren Stüzbeinen und Saugnäpfen an der zu bearbeitenden Fläche positioniert und nur manuell ausgerichtet werden kann. Weiterhin ist aus US 6 036 409 eine tragbare Werkzeugmaschine bekannt, die zum Herstellen von Senkbohrungen in Werkstücken, die jedoch nur aufgrund eines vorher präzise gebohrten Lochs präzise ausgerichtet werden kann. Schließlich ist aus WO 2005/046931 A1 eine Vorrichtung zum Beareiten von Platten bekannt, bei der ein Bearbeitungsgerät durch ein Handhabungssystem an das zu bearbeitende Werkstück geführt wird, auf der anderen Plattenseite jedoch durch ein auf der gegenüberliegenden Seite des Bearbeitungsgeräts korrespondierendes Halteelement geführt werden muss, so dass sich die Platte durch die beim Bearbeiten auftretenden Kräfte nicht verformt.

Damit sind die vorbekannten Vorrichtungen zur Bearbeitung grossformatiger Bauteile, bei denen zugleich eine hohe Positionierungsgenauigkeit der Werkzeuge erforderlich ist, nur bei Verwendung entsprechend massiv ausgelegter Handhabungssysteme, welche in der Regel den Einsatz eines korrespondierenden Innensystems erfordern, bzw. für räumlich begrenzte Arbeitsräume geeignet.

Aufgabe der Erfindung ist es, eine Vorrichtung zur Bearbeitung von Bauteilen mit umfangreichen geometrischen Abmessungen zu schaffen, die eine räumlich flexible und zugleich präzise Positionierung von unterschiedlichen Werkzeugen in Bezug zum Bauteil erlaubt, wobei das zur Positionierung eingesetzte Handhabungssystem eine mechanisch relativ leichte konstruktive Auslegung aufweist.

Diese Aufgabe wird durch eine Vorrichtung mit den Merkmalen des Patentanspruchs 1 gelöst. Vorteilhafte Ausführungsformen sind Gegenstand der abhängigen Ansprüche.

Dadurch, dass im Bereich des Halterahmens mindestens ein Anbindungselement angeordnet ist, ist eine sichere Positionierung der Bearbeitungseinrichtung auch auf grossflächigen Bauteilen mittels eines den Halterahmen tragenden Handhabungssystems möglich, wobei das Handhabungssystem eine mechanisch relativ leichte konstruktive Auslegung aufweisen kann und insbesondere über keine hohe Eigensteifigkeit verfügen muss.

Zwar können mit den bekannten Vorrichtungen zur Bearbeitung von Bauteilen auch ausreichende Positioniergeschwindigkeiten und auch zunächst zufriedenstellende Positioniergenauigkeiten erreicht werden. Während des Bearbeitungsprozesses kommt es aber auf Grund der Verformung insbesondere nachgiebiger Bauteile sowie der Verformung des Handhabungssystems selbst zu Positionierungsfehlern zwischen den Bauteilen und der Bearbeitungseinrichtung. Zudem sind für Bauteile mit mangelnder Eigensteifigkeit zur Bearbeitung grundsätzlich Innensysteme zur Abstützung notwendig, die bei Einsatz der erfindungsgemäßen Vorrichtung nicht mehr erforderlich sind.

Erfindungsgemäß ist mindestens ein Anbindungselement kraftschlüssig mit einer Bauteiloberfläche verbindbar und lösbar ausgebildet, um die durch die mindestens eine Bearbeitungseinrichtung und/oder durch den mindestens einen Druckstempel auf das Handhabungssystem wirkenden Reaktionskräfte durch Ableitung auf die Bauteiloberfläche zu minimieren.
Hierdurch werden Reaktionskräfte vom Handhabungssystem weitgehend ferngehalten.

Erfindungsgemäß ist der Halterahmen mittels des Handhabungssystems in Bezug auf die Bauteiloberfläche frei im Raum positionierbar
Diese konstruktive Ausgestaltung ermöglicht eine räumlich flexible Heranführung der Bearbeitungseinrichtung an die Bauteiloberfläche.

Nach einer weiteren vorteilhaften Ausbildung der Erfindung weist mindestens ein Druckstempel wenigstens einen Aktuator auf, um eine Positionierung relativ zum Halterahmen zu ermöglichen.
Hierdurch ist es möglich, mindestens einen Druckstempel weitgehend unabhängig von der Bewegung des Halterahmens in Bezug auf die Bauteiloberfläche mit noch größerer Genauigkeit und/oder definierter Kraft zu positionieren.

Gemäß einer weiteren vorteilhaften Ausgestaltung der Erfindung weist mindestens ein Anbindungselement wenigstens einen Aktuator auf, um eine Positionierung relativ zum Halterahmen zu ermöglichen.
Diese Ausgestaltung ermöglicht zusätzlich zu den Bewegungsmöglichkeiten des Handhabungssystems eine hiervon zumindest teilweise unabhängige Positionierung der Anbindungselemente, wodurch eine gute Anpassbarkeit der Vorrichtung an unterschiedliche Oberflächengeometrien von Bauteilen gegeben ist.

Eine weitere vorteilhafte Ausgestaltung der erfindungsgemäßen Vorrichtung sieht vor, dass mindestens eine Bearbeitungseinrichtung wenigstens einen Aktuator aufweist, um eine Positionierung relativ zum Halterahmen zu ermöglichen.
Hierdurch wird eine von der Bewegung des Handhabungssystems weitgehend unabhängige und sehr exakte Positionierung der Bearbeitungseinrichtung ermöglicht.

Nach Maßgabe einer weiteren vorteilhaften Ausgestaltung der erfindungsgemäßen Vorrichtung weist mindestens ein Druckstempel und/oder mindestens ein Anbindungselement wenigstens einen Kraftmesssensor und/oder Wegmesssensor auf.
Mittels dieser Ausgestaltung ist eine schonende Bearbeitung empfindlicher Bauteile möglich, da bestimmte vorab definierbare Grenzkräfte nicht überschritten werden.

Nach einer weiteren vorteilhaften Ausgestaltung sind das Anbindungselement oder die Anbindungselemente vorzugsweise in etwa gleichmäßig zueinander beabstandet über eine Umfangskontur des Halterahmens verteilt angeordnet.
Diese konstruktive Ausgestaltung ermöglicht auf Grund der sich hieraus ergebenden symmetrischen Anordnung der Anbindungselemente die Einleitung höherer, durch die Bearbeitungseinrichtung und/oder die Druckstempel bedingte Kräfte in die Bauteiloberfläche.

Nach einer weiteren vorteilhaften Ausgestaltung weist der Halterahmen eine vieleckige geometrische Gestaltung mit insbesondere vier Längsseiten auf.
Hierdurch ist eine einfache Herstellbarkeit des Halterahmens gegeben.

Gemäß einer weiteren Ausgestaltung sind mindestens zwei Anbindungselemente auf den Längsseiten verschiebbar ausgebildet, um eine Bearbeitung der Bauteile im Bereich eines Bauteilendes zu ermöglichen.
Hierdurch wird ein flexibleres Ausweichen der Vorrichtung bei der Bearbeitung von Bauteilen mit komplexen Bauteilstörstrukturen ermöglicht. Darüber hinaus können im Rahmen der Bearbeitung von Bauteilen mittels der erfindungsgemäßen Vorrichtung beispielsweise Längs- und Quernähte bis zum Bauteilende bearbeitet werden.

Nach Maßgabe einer weiteren vorteilhaften Ausgestaltung weist der Halterahmen mindestens zwei verschwenkbare Haltearme auf, wobei das oder die Anbindungselemente auf den Halterarmen verschiebbar angeordnet sind, um eine Bearbeitung der Bauteile im Bereich des Bauteilendes zu ermöglichen.
Diese Ausgestaltung ermöglicht eine Bearbeitung der Bauteile bis zu einem Bauteilende. Darüber hinaus wird ein flexibleres Ausweichen beim Auftreten von Bauteilstörstrukturen ermöglicht.

In Gemäßheit zu einer weiteren vorteilhaften Ausgestaltung der Erfindung ist mindestens eine Bearbeitungseinrichtung innerhalb wenigstens eines Druckstempels angeordnet.
Mittels des Druckstempels können beispielsweise mindestens zwei in einem Überlappungsbereich zusammengeheftete Bauteile zur Bearbeitung fest aufeinander gedrückt werden, sodass beispielsweise beim Einbringen einer Bohrung mittels der Bearbeitungseinrichtung keine Späne zwischen die Bauteile gelangen und zudem eine hohe Passgenauigkeit der entstehenden Bohrung erzielbar ist. Dies setzt weiterhin voraus, dass auf jedem Bauteil mindestens ein Anbindungselement positioniert ist.

Eine weitere vorteilhafte Ausgestaltung der Erfindung sieht vor, dass mindestens ein Anbindungselement einen Sauger aufweist.
Hierdurch ist es möglich, relativ große mechanische Kräfte infolge des Umgebungsluftdrucks mittels der Anbindungselemente vom Halterahmen auf die Bauteiloberfläche zu übertragen, sodass von der Bearbeitungseinrichtung und/oder dem Druckstempel ausgehende Andruckkräfte vom Handhabungssystem weitgehend ferngehalten werden. Darüber hinaus bietet diese konstruktive Ausgestaltung den Vorteil, dass sich die Anbindungselemente von der Bauteiloberfläche leicht wieder ablösen lassen. Weiterhin sind keine bauteilseitigen Anbindungshilfen, wie zum Beispiel Stehbolzen, Befestigungsbohrungen oder dergleichen notwendig.

Nach einer weiteren vorteilhaften Ausgestaltung der Erfindung ist mindestens eine Bearbeitungseinrichtung innerhalb wenigstens eines Saugers angeordnet.

Diese Ausgestaltung ermöglicht einen räumlich kompakteren Aufbau des Halterahmens, weil mindestens ein Anbindungselement die Bearbeitungseinrichtung konzentrisch umschließt und die separate Anordnung mindestens eines Anbindungselementes auf dem Halterahmen entfallen kann. Hierdurch können Bauteile auch an schwer zugänglichen Bereichen bearbeitet werden. Weiterhin ermöglicht diese Anordnung auf Grund ihrer Symmetrie die effektive und gleichmäßige Übertragung etwaiger von der Bearbeitungseinrichtung und/oder dem Druckstempel ausgehender Kräfte. Diese Anordnung stellt quasi den Idealfall des Prinzips der erfindungsgemäßen lokalen Kraftableitung dar.

Weitere vorteilhafte Ausgestaltungen der Vorrichtung sind in den weiteren Patentansprüchen dargelegt.

In der Zeichnung zeigt:
- **Fig. 1**: Eine Seitenansicht der erfindungsgemäßen Vorrichtung mit einem Halterahmen gemäß einer ersten Ausführungsvariante,
- **Fig. 2**: eine Detaildarstellung des Halterahmens gemäß einer zweiten Ausführungsvariante,
- **Fig. 3**: eine Detaildarstellung des Halterahmens gemäß einer dritten Ausführungsvariante,
- **Fig. 4**: eine Draufsicht auf den Halterahmen gemäß der ersten Ausführungsvariante,
- **Fig. 5**: eine weitere Ausführungsvariante des Halterahmens in einer Draufsicht,
- **Fig. 6**: eine weitere Ausführungsvariante des Halterahmens in einer Draufsicht,
- **Fig. 7**: eine perspektivische Ansicht eines Druckstempels,
- **Fig. 8**: eine perspektivische Ansicht einer weiteren Ausführungsvariante des Druckstempels und
- **Fig. 9**: einen Querschnitt durch einen Sauger.

In der Zeichnung sind jeweils gleiche konstruktive Elemente mit gleichen Bezugsziffern versehen.

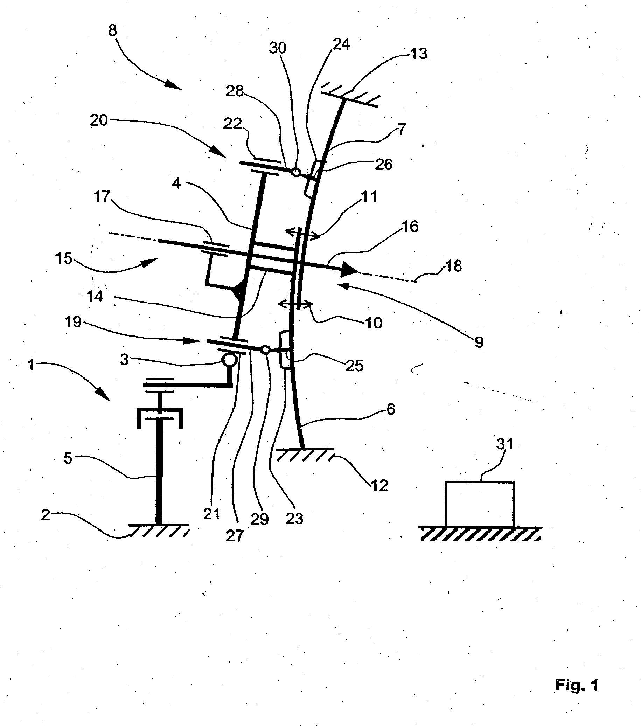

Die **Fig. 1** zeigt eine Seitenansicht der erfindungsgemäßen Vorrichtung mit einem Halterahmen gemäß einer ersten Ausführungsvariante.

Die Vorrichtung umfasst unter anderem ein Handhabungssystem 1, dass auf einem Widerlager 2 fest angeordnet ist. In einem Befestigungspunkt 3 ist der Halterahmen 4 starr mit einer letzten Achse des Handhabungssystem 1 verbunden. Abweichend hiervon kann der Halterahmen 4 über ein zusätzliches Gelenk an die letzte Achse des Handhabungssystem 1 angelenkt sein. In diesem Fall ist das zusätzliche Gelenk versteifbar ausgebildet. Das Handhabungssystem 1 ist beispielsweise als ein bekannter Standard-Industrieroboter bzw. Knickarmroboter 5 mit wenigstens sechs Achsen ausgebildet, der eine nahezu beliebige Positionierung des Halterahmens 4 in Bezug auf eine von Bauteilen 6,7 gebildete Bauteiloberfläche 8 im Raum ermöglicht.

Bei den Bauteilen 6,7 handelt es sich beispielsweise um Ober-, Unter- oder Seitenschalen sowie Fußbodengerüste zur Bildung von vollständigen Rohbau-Rumpfsektionen für Luftfahrzeuge, insbesondere für Passagier- oder Militärluftfahrzeuge. Die Anwendung der erfindungsgemäßen Vorrichtung ist hierbei aber nicht auf den Sektionsbau für Luftfahrzeuge beschränkt zu sehen.

Die Bauteile 6,7 überlappen sich in einem Überlappungsbereich 9. Im Überlappungsbereich 9 sind die Bauteile durch Heftelemente 10,11 geheftet. Durch die Heftung wird erreicht, dass sich die Bauteile 6,7 im Überlappungsbereich 9 während der Bearbeitung nicht gegeneinander verschieben bzw. voneinander abheben und im Wesentlichen planparallel aufeinander liegen. Durch eine geeignete Anordnung der Heftelemente 10,11 ist auch die Bearbeitung von mehr als zweilagigen Bauteilpaketen möglich. Die Heftelemente 10,11 sind beispielsweise in der Form einer Klammer, einer Schraubverbindung, einer Klemmverbindung oder einer vergleichbaren, wieder lösbaren Verbindung ausgebildet. Auch eine temporäre Heftung, beispielsweise durch Heftniete, ist möglich. Die Heftung der Bauteile 6,7 kann alternativ auch durch eine nicht lösbare zumindest bereichsweise Verbindung, zum Beispiel mittels Heftnieten, Verklebung, Verschweißung, Verpressung, Verklemmung oder dergleichen erfolgen. Das obere Heftelement 11 ist im hier dargestellten Ausführungsbeispiel mit den zwei Bauteilen 6,7 nicht zwingend erforderlich, da sich das Bauteil 7 ausreichend auf dem Bauteil 6 abstützt.

Bei der Bearbeitung von durchgängigen Bauteilen 6,7, die keinen Überlappungsbereich 9 aufweisen, beispielsweise bei der Einbringung von Bohrungen in durchgehende Platten, Bleche oder dergleichen, sind mangels der Existenz des Überlappungsbereiches 9 keine Heftelemente 10,11 erforderlich.

Die Bauteile 6,7 sind jeweils auf Widerlagern 12,13 abgefangen, um eine möglichst präzise Positionierung in Bezug auf das Handhabungssystem 1 zu gewährleisten. Die Widerlager 12,13 können beispielsweise als Stützrahmen, als Stützlager oder dergleichen ausgebildet sein. Den Widerlagern 12,13 kommt die Funktion zu, die Relativlage der Bauteile 6,7 zum Handhabungssystem 1 während des Bearbeitungsprozesses beizubehalten. Die absolute Positionierung bzw. Referenzierung des Handhabungssystems 1 in Bezug auf die Bauteile 6,7 muss hierbei lediglich mit einer hinreichenden Genauigkeit erfolgen, da zusätzlich eine Bestimmung der Relativposition des Halterahmens 4 in Bezug auf die Bauteile 6,7 erfolgt, sodass etwaige Positionierfehler des Handhabungssystems 1 ausgeglichen werden können. Somit muss das innerhalb der erfindungsgemäßen Vorrichtung Anwendung findende Handhabungssystem 1, ungeachtet der erforderlichen hohen Positionierungsgenauigkeiten, mechanisch nur so stark ausgebildet sein, dass es die aus dem Positionierungsvorgang resultierenden Kräfte, die unter anderem durch die Bewegung der Masse der Bearbeitungseinrichtung 15 und des Halterahmens 4 entstehen, aufnehmen kann.

Weiterhin weist der Halterahmen 4 einen Druckstempel 14 und eine Bearbeitungseinrichtung 15 auf. Die Bearbeitungseinrichtung 15 ist im gezeigten Ausführungsbeispiel der Fig. 1 als eine Bohrvorrichtung 16 zur Einbringung von Bohrungen in die Bauteile 6,7, die beispielsweise zur Aufnahme von Nieten dienen können, ausgebildet. Die Bearbeitungseinrichtung 15 ist mittels eines Aktuators 17 in Richtung einer Längsachse 18 beidseitig verschiebbar ausgebildet und somit auch in Relation zum Halterahmen 4 beweglich.

Die erfindungsgemäße Vorrichtung kann, wenn auch nur in eingeschränktem Maße, auch für kontinuierlich bzw. diskontinuierlich fortschreitende Fügeverfahren eingesetzt werden. In diesen Fällen weist die Bearbeitungseinrichtung 15 beispielsweise eine Nieteinrichtung, eine Schweißeinrichtung, insbesondere eine Laserschweißeinrichtung oder eine Reibrührschweißeinrichtung, eine Klebeeinrichtung, eine Presseinrichtung oder dergleichen auf.

Die mindestens eine Bearbeitungseinrichtung 15 kann weiterhin austauschbar ausgebildet sein, sodass unterschiedliche Bearbeitungseinrichtungen 15 für unterschiedliche Fertigungs- bzw. Bearbeitungsprozesse leicht und schnell am Halterahmen 4 befestigbar sind.

Der fest mit dem Halterahmen 4 verbundene Druckstempel 14 dient insbesondere dazu, die Bauteile 6,7 im Überlappungsbereich 9 fest aneinander zu pressen. Hierdurch wird zum einen vermieden, dass Späne zwischen die Bauteile 6,7 gelangen. Zum anderen wird eine hohe Deckungsgleichheit zwischen den in den Bauteilen 6 und 7 entstehenden Teilbohrungen erreicht. Dieser Umstand ist insbesondere von Bedeutung, wenn in die entstehenden Bohrungen beispielsweise Nieten, Schrauben oder dergleichen zur Verbindung der Bauteile 6,7 eingebracht werden sollen. Der Druckstempel 14 ist vorzugsweise derart ausgebildet, dass dieser die Bearbeitungseinrichtung 15 zumindest teilweise umschließt. Der Halterahmen 4 kann abweichend von der Darstellung der Fig. 1 mehrere Druckstempel 14 und/oder Bearbeitungseinrichtungen 15 aufweisen.

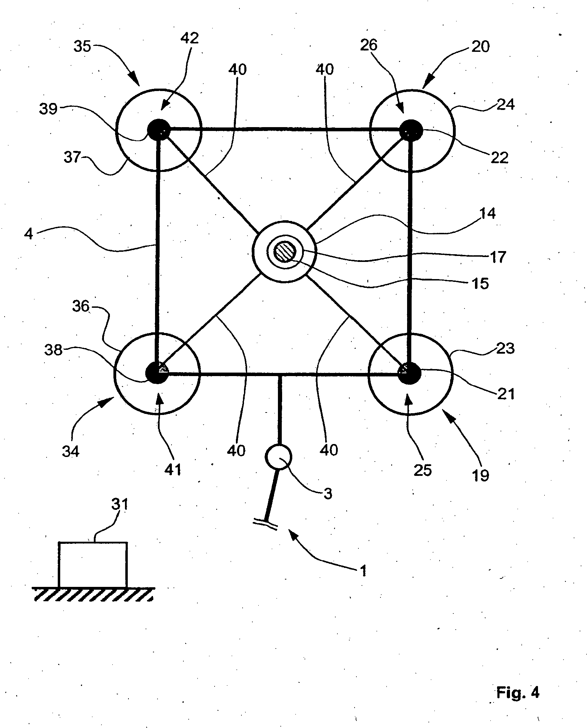

Erfindungsgemäß weist der Halterahmen 4 die sichtbaren Anbindungselemente 19,20 auf. Die Anbindungselemente 19,20 sind durch Aktuatoren 21,22 relativ zum Halterahmen 4 positionierbar: Hinter den Anbindungselementen 19,20 sind nach hinten versetzt - und daher in der Darstellung der Fig. 1 verdeckt - weitere zwei Anbindungselemente mit jeweils einem Aktuator am Halterahmen 4 in Entsprechung zu den Anbindungselementen 19,20 vorgesehen (vgl. insb. Fig. 4). Die Anbindungselemente 19,20 sind als Sauger 23,24 ausgebildet. Die Sauger 23,24 sind mit einem elastischen Kunststoffmaterial gebildet, das eine rückstandsfreie Ablösung von der Bauteiloberfläche 8 gewährleistet. Entsprechendes gilt auch für die nicht sichtbaren, hinten liegenden Anbindungselemente. Durch die Evakuierung der Sauger 23,24 ist der Halterahmen 4 infolge des Umgebungsluftdrucks kraftschlüssig mit der Bauteiloberfläche 8 verbindbar, kann im Bedarfsfall aber auch leicht wieder von dieser abgelöst werden. Es entsteht eine feste und gleichzeitig wieder lösbare Anbindung zwischen dem Halterahmen 4 und der Bauteiloberfläche 8. Voraussetzung hierfür ist eine im Wesentlichen glatte Oberflächenstruktur der Bauteiloberfläche 8. Für eine schnelle Ablösung der Sauger 23,24 von der Bauteiloberfläche 8 können nicht näher dargestellte Vorrichtungen zum Einblasen von Druckluft in die Sauger 23,24 vorgesehen sein. Anderenfalls können die Sauger 23,24 auch nach dem Abbau des Unterdrucks weiter an der Bauteiloberfläche 8 anhaften, sodass eine bestimmte Ablösekraft vom Handhabungssystem 1 aufgebracht werden muss. Anstatt der Sauger 23,24 können die Anbindungsmittel 19,20 beispielsweise auch Magnete, Haftmittel, insbesondere künstliche Haftlamellen - die den Haftlamellen von Geckos nachgebildet sind -, Klebemittel oder dergleichen aufweisen.

Innerhalb der Sauger 23,24 ist jeweils mindestens ein Stützelement 25,26, ein so genannter "Hardpoint" integriert. Die Stützelemente 25,26 weisen an ihren zur Bauteiloberfläche 8 gerichteten Enden jeweils, in der Darstellung der Fig. 1 der Übersichtlichkeit halber nicht näher dargestellte Kunststoffelemente zur Bildung einer Auflagefläche auf. Entsprechendes gilt für die nicht sichtbaren, hinten liegenden Anbindungselemente. Die Stützelemente 25,26 liegen im evakuierten Zustand der Sauger 23,24 mit ihren Kunststoffelementen als Auflagefläche auf der Bauteiloberfläche 8 an. Hierdurch wird eine undefinierte Deformation der Sauger 23,24 infolge der Anbindung an die Bauteiloberfläche 8 bzw. der Evakuierung sowie eine undefinierte Deformation der Sauger 23,24 durch etwaige vom Halterahmen 4 ausgehende Kräfte und ein hieraus möglicherweise resultierender Positionierungsfehler des Halterahmens 4 in Relation zur Bauteiloberfläche 8 vermieden.

Etwaige durch die Bearbeitungseinrichtung 15 entstehende Reaktionskräfte, beispielsweise Reaktionskräfte infolge des Vorschubs einer als Bohrvorrichtung 16 ausgebildeten Bearbeitungseinrichtung 15 und/oder Reaktionskräfte infolge der Anpressung des Druckstempels 14 an die Bauteiloberfläche 8, werden erfindungsgemäß unmittelbar auf die Bauteile 6,7 übergeleitet und können demzufolge nicht mehr auf das Handhabungssystem 1 zurückwirken. Infolge der erfindungsgemäßen Ausbildung der Vorrichtung kann das Handhabungssystem 1 daher mechanisch weniger steif und leichter ausgelegt werden. Trotz der leichteren und weniger steifen Auslegung des Handhabungssystem 1 erfolgt eine verbesserte Sicherstellung der Relativlage der Bearbeitungseinrichtung 15 zu den Bauteilen 6,7, wodurch die Prozessqualität, zum Beispiel in Form der Bohrungsqualität, insgesamt verbessert wird. Durch die erfindungsgemäß verkürzten Kraftwege wird zudem die Belastung der Bauteile 6,7 erheblich reduziert.

Mittels der erfindungsgemäßen Vorrichtung lassen sich daher insbesondere großformatige Bauteile 6,7 mit hoher Präzision bearbeiten. Die Bauteile 6,7 können hierbei eine beliebige, auch von einer ebenen Gestaltung abweichende Oberflächengeometrie aufweisen.

Die Aktuatoren 21,22 weisen Kolbenstangen 27,28 auf, an deren Enden die Sauger 23,24 durch Gelenke 29,30 schwenkbar angelenkt sind. Die Gelenke 29,30 ermöglichen eine Anbindung der Sauger 23,24 auch an nicht ebene, insbesondere gekrümmte Bauteiloberflächen 8. Die Kolbenstangen 27,28 der Aktuatoren 21,22 sind in Bezug auf den Halterahmen 4 im Wesentlichen senkrecht beweglich ausgebildet. In einer alternativen Ausführungsform können die Aktuatoren 21,22 auch in Bezug auf den Halterahmen 4 beweglich, insbesondere verschwenkbar angeordnet sein.
Die Aktuatoren 21,22 können beispielsweise als Hydraulik- oder Druckluftzylinder ausgebildet sein. Alternativ können auch elektrisch betätigbare Spindelantriebe, Zahnstangenantriebe oder sonstige Linearantriebe vorgesehen sein. Weiterhin können die Aktuatoren 21,22 derart ausgebildet sein, dass diese eine Beweglichkeit in mehr als einer Raumrichtung bzw. einer Achse aufweisen. Die vorstehend gemachten Ausführungen gelten entsprechend auch für die in der Fig. 1 nicht darstellbaren, hinten liegenden Aktuatoren und Sauger.

Der Halterahmen 4 weist bevorzugt eine quadratische oder rechteckförmige Grundrissgeometrie auf, wobei in Eckbereichen die beispielsweise vier Anbindungselemente angeordnet sind, um eine möglichst wirkungsvolle Überleitung der durch die Bearbeitungseinrichtung 15 und/oder den Druckstempel 14 verursachten Reaktionskräfte auf die Bauteiloberfläche 8 zu erreichen. Hiervon abweichende Grundrissgeometrien, beispielsweise kreisförmige, elliptische oder Kombinationen sind alternativ möglich (vgl. insb. Fig. 4).

Vorzugsweise ist der Halterahmen 4 so gestaltet, dass die Sauger 23,24 möglichst nah an der Bearbeitungseinrichtung 15 angeordnet sind. Infolge dieser Anordnung ergibt sich im Wirkungsbereich der Sauger 23,24 faktisch eine lokale "Versteifung" der Bauteile 6,7, insbesondere wenn diese nur geringe Materialstärken aufweisen. Die "Versteifung" ergibt sich im Wesentlichen aus einer Verkleinerung der infolge der Bearbeitungseinrichtung 15 deformierbaren Bauteiloberfläche 8 aufgrund der möglichst nah an der Bearbeitungseinrichtung 15 positionierten Anbindungselemente 19,20 bzw. der Sauger 23,24. Dadurch können selbst mechanisch labile Bauelemente 6,7, wie beispielsweise dünne Bleche, die sich ansonsten bei Einleitung bearbeitungsbedingter Druck- oder Zugkräfte relativ leicht deformieren, mit der erfindungsgemäßen Vorrichtung ohne die Gefahr von unerwünschten Verformungen bearbeitet werden.

Die Positionierung bzw. Referenzierung des Halterahmens 4 sowie des Druckstempels 14 erfolgt durch eine entsprechende Positionierung des Handhabungssystems 1. Die Anbindungselemente 19,20 lassen sich hiervon unabhängig relativ zum Halterahmen 4 mittels der Aktuatoren 21,22 verfahren. Die Bearbeitungseinrichtung 15 bzw. die Bohrvorrichtung 16 selbst ist mittels des Aktuators 17 in Richtung der Längsachse 18, die im Wesentlichen senkrecht zur Bauteiloberfläche 8 verläuft, in Relation zum Halterahmen 4 verschiebbar ausgebildet.

Soll mittels der als Bohrvorrichtung ausgebildeten Bearbeitungseinrichtung 15 beispielsweise eine Bohrung in die Bauteile 6,7 eingebracht werden, so erfolgt zunächst eine "Referenzierung" des Halterahmens 4 in Bezug auf die Bauteile 6,7. Der Begriff der "Referenzierung" bedeutet in diesem Zusammenhang die Bestimmung der Relativposition der Bauteile 6,7 zum Halterahmen 4. Die Referenzierung kann durch die Erkennung von Referenzmerkmalen an den Bauteilen 6,7, beispielsweise in der Form von Bohrungen, optischen Markierungen, Bauteilkanten oder dergleichen, erfolgen.
Im Anschluss daran wird der Halterahmen 4 mittels des Handhabungssystems 1 so verfahren, dass der Druckstempel 14 die Bauteiloberfläche 8 im Idealfall kraftlos berührt bzw. an dieser anliegt. Durch Positionierungsungenauigkeiten zwischen den Bauteilen 6,7 und dem Druckstempel 14 drückt der Druckstempel 14 nach erfolgter Positionierung entweder schon mit einer geringen Kraft auf die Bauteiloberfläche 8 oder der Druckstempel 14 verharrt mit geringem Abstand unmittelbar vor der Bauteiloberfläche 8, so dass er diese nicht berührt. In beiden Fällen kann eine Positionskorrektur des Druckstempels 14 mittels einer Steuer- und Regeleinrichtung 31, die auch zur Steuerung der gesamten Vorrichtung, insbesondere der Bearbeitungseinrichtung 15, der Aktuatoren 17,21,22 und der Sauger 23,24 dient, erfolgen. Die Steuer- und Regeleinrichtung 31 ist beispielsweise als eine Rechnereinheit, insbesondere als eine Prozessrechnereinheit ausgebildet.
Im Anschluss daran werden die Anbindungselemente 19,20 bzw. die Sauger 23,24 mittels der Aktuatoren 21,22 ausgefahren und auf die Bauteiloberfläche 8 aufgesetzt. Die Aktuatoren 21,22 können beispielsweise als kraftgeregelte Pneumatikzylinder ausgebildet sein. Das Aufsetzen der Sauger 23,24 erfolgt hierbei mit einer Kraft, die hinreichend groß ist, um eine sichere Abdichtung der Sauger 23,24 beim Evakuieren zu gewährleisten, gleichzeitig aber nicht zu einer Veränderung der Relativlage zwischen den Bauteilen 6,7 sowie dem Druckstempel 14 führt.
Dann werden die Sauger 23,24 vollständig evakuiert, sodass der Halterahmen 4 über die Aktuatoren 21,22 infolge des Umgebungsluftdrucks kraftschlüssig an die Bauteile 6,7 angebunden wird. Die Stützelemente 25,26 bzw. die an ihren Enden angeordneten Kunststoffelemente liegen hierbei fest auf der Bauteiloberfläche 8 auf. Die Stützelemente 25,26 verhindern eine Positionsveränderung des Halterahmens 4 in Relation zur Bauteiloberfläche 8 infolge einer unkontrollierten Deformation der Sauger 23,24 durch die Evakuierung oder einer unkontrollierten Deformation der Sauger 23,24 durch etwaige vom Halterahmen 4 ausgehende Kräfte und hieraus möglicherweise resultierende Positionierungsfehler. Die Sauger 23,24 können bei diesem Vorgang infolge der Gelenke 29,30 in Bezug auf den Halterahmen 4 auch von 90° abweichende Winkel einnehmen. Die erfindungsgemäße Vorrichtung ist daher auch zur Bearbeitung von Bauteiloberflächen 8 mit nahezu beliebigen Oberflächengeometrien, beispielsweise zur Bearbeitung von konvexen, konkaven, ebenen oder ungleichmäßig gekrümmten Oberflächen, einsetzbar.
Weiterhin ist es möglich, die Aktuatoren 21,22 den sich infolge der Evakuierung in Richtung der Bauteile 6,7 bewegenden Saugern 23,24 nachzuführen, das heißt die Aktuatoren 21,22 können in diese Richtung ausgefahren werden.
Im weiteren Verlauf werden die Aktuatoren 21,22 eingefahren, das heißt deren Bewegungsrichtung wird umgekehrt, sodass eine Verspannungskraft zwischen dem Druckstempel 14 und den Bauteilen 6,7 bzw. der Bauteiloberfläche 8 aufgebaut wird. Hierbei ist eine schwingungsdämpfend wirkende Fixierung der daraus resultierenden Stellung der Aktuatoren 21,22 mittels geeigneter, gleichfalls durch die Steuer- und Regeleinrichtung 31 betätigter Klemmelemente, denkbar.
Bei diesem Vorgang treten im Idealfall keinerlei Verschiebungen zwischen den Bauteilen 6,7 und dem Handhabungssystem 1 auf. Etwaige in der Praxis auftretende Verschiebungen fallen in der Regel gering aus und sind daher vernachlässigbar. Die Positionierung des Halterahmens 4 mit der Bearbeitungseinrichtung 15 erfolgt in Bezug auf die Bauteile 6,7 durch das Handhabungssystem 1, während über die Anbindungselemente 19,20 anschließend lediglich eine passive Fixierung der einmal eingenommenen Lage des Halterahmens 4 sowie der Aufbau der Verspannungskraft zwischen dem Druckstempel 14 und den Bauteilen 6,7 erfolgt.

Abschließend wird mittels der beispielsweise als Bohrvorrichtung 16 ausgebildeten Bearbeitungseinrichtung 15 eine Bohrung in die Bauteile 6,7 eingebracht oder es werden andere Bearbeitungsschritte vollzogen. Etwaige durch die Betätigung der Bearbeitungseinrichtung 15 und/oder des Druckstempels 14 entstehende Reaktionskräfte, beispielsweise Vorschubkräfte im Falle einer Bohrvorrichtung, werden vom Halterahmen 4 aufgenommen und mittels der Anbindungselemente 19,20 unmittelbar auf die Bauteile 6,7 zurückgeleitet, sodass sich ein lokaler geschlossener Kraftring bildet. Die entstehenden Reaktionskräfte werden somit nicht mehr auf das Handhabungssystem 1 zurück übertragen, sodass dieses konstruktiv leichter und weniger steif ausgelegt werden kann.

Der vorstehend geschilderte Positionierungsablauf gilt in Entsprechung ebenso für die in der Fig. 1 nicht näher dargestellten, weiter hinten liegenden Anbindungselemente bzw. Sauger und Aktuatoren.

Alternativ ist es auch denkbar, den Druckstempel 14 mit der Bearbeitungseinrichtung 15 zunächst mit einem vordefinierten Abstand kurz oberhalb der Bauteiloberfläche 8 zu positionieren und nach der erfolgten Anbindung der Anbindungselemente 19,20 an der Bauteiloberfläche 8 den Druckstempel 14 mit der Bearbeitungseinrichtung 15 durch das Einfahren der Aktuatoren 21,22 - bei gleichzeitiger Nachführung der Position des Handhabungssystems 1 - an die Bauteile 6,7 zur Bearbeitung heranzufahren. In diesem Fall wäre eine Verschiebbarkeit der Bearbeitungseinrichtung 15 entlang der Längsachse 18 mittels des Aktuators 17 entbehrlich. Dem Vorteil des konstruktiv einfacheren und leichteren Aufbaus stünde jedoch der Nachteil eines erhöhten Regelungsaufwandes sowie einer geringeren Stabilität der erreichten Positionierung entgegen.

Die Aktuatoren 21,22, der Druckstempel 14, die Bearbeitungseinrichtung 15 sowie das Handhabungssystem 1 können zusätzlich mit Kraftmesssensoren und/oder Sensoren zur Wegerfassung ausgestattet sein, um beispielsweise im Falle einer als Bohrvorrichtung 16 ausgebildeten Bearbeitungseinrichtung 15 die auf einen Bohrer und/oder Fräser wirkenden Kräfte messtechnisch zu erfassen und angepasst hieran den Vorschub zu variieren.

Eine Kraftmessung kann beispielsweise taktil oder über eine Strom- bzw. Spannungsmessung im Bereich einer Leistungssteuerelektronik erfolgen, die zum Betrieb der Aktuatoren erforderlich ist. Eine Wegmessung kann beispielsweise elektrooptisch durch Laser, mittels eines Kamerasystems, durch eine inkrementale Wegemessung oder dergleichen erfolgen. Das Ziel der Weg- und Kraftmessungen im Bereich der Anbindungselemente und des Druckstempels ist eine möglichst gleichmä-βige Kraftverteilung auf alle Anbindungselemente.

Die erfindungsgemäße Vorrichtung erlaubt im Ergebnis eine räumlich exakt definierte Aufbringung relativ großer mechanischer Kräfte auf die Bauteile 6,7 bzw. die Bauteiloberseite 8, ohne dass diese zu einer entsprechenden mechanischen Rückwirkung auf das Handhabungssystem 1 führen. Mittels der erfindungsgemäßen Vorrichtung lassen sich daher insbesondere großformatige Bauteile 6,7 einer sehr präzisen Bearbeitung unterziehen. In einer bevorzugten Ausführungsform der erfindungsgemäßen Vorrichtung ist das Handhabungssystem 1 beispielsweise als ein in mindestens sechs Achsen steuerbarer Standard-Industrieroboter oder Knickarmroboter 5 ausgeführt.

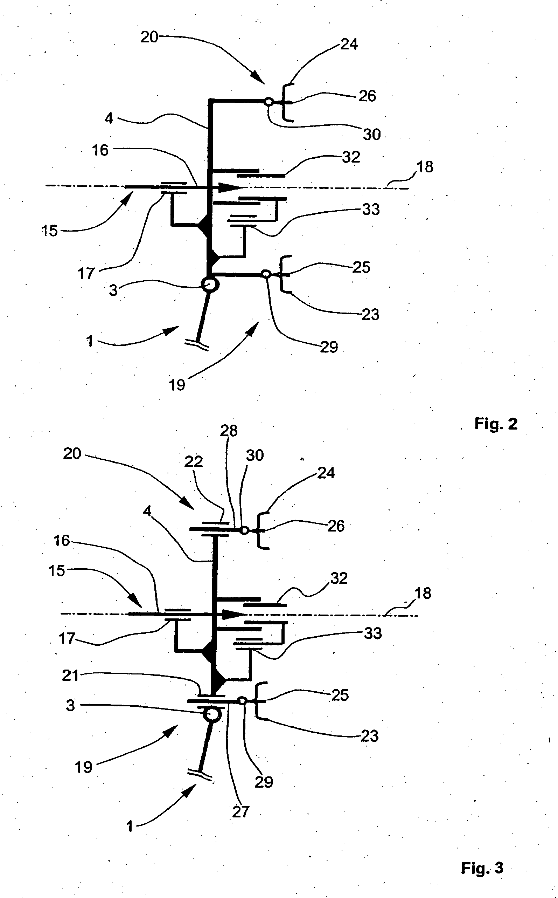

Die **Fig. 2** zeigt eine Detaildarstellung des Halterahmens gemäß einer zweiten Ausführungsvariante.

Der Halterahmen 4 ist wiederum mit dem Handhabungssystem 1 im Befestigungspunkt 3 verbunden. Der Halterahmen 4 weist die Anbindungselemente 19,20 auf, die über die Gelenke 29,30 unmittelbar mit dem Halterahmen 4 verbunden sind. Die Anbindungselemente 19,20 sind wiederum als Sauger 23,24 mit darin befindlichen Stützelementen 25,26 ausgebildet. Hinter den Anbindungselementen 19,20 sind in Bezug auf die Zeichenebene nach hinten versetzt - und daher in der Darstellung der Fig. 2 verdeckt - weitere zwei Anbindungselemente mit Stützelementen über Gelenke am Halterahmen 4 in Entsprechung zur Anordnung der Anbindungselemente 19,20 befestigt (vgl. insb. Fig. 4). Im Unterschied zum Ausführungsbeispiel nach Maßgabe der Fig. 1 weisen die Anbindungselemente 19,20 keine Aktuatoren auf und sind unmittelbar über die Gelenke 29,30 mit dem Halterahmen 4 verbunden.

Im Bereich des Halterahmens 4 ist wiederum die Bearbeitungseinrichtung 15 angeordnet. Die exemplarisch als Bohrvorrichtung 16 ausgebildete Bearbeitungseinrichtung 15 ist über den Aktuator 17 mit dem Halterahmen 4 verbunden. Der Aktuator 17 ermöglicht eine Verschiebung der Bearbeitungseinrichtung 15 parallel zur Längsachse 18 in beide Richtungen. Der Aktuator 17 ist fest mit dem Halterahmen 4 verbunden. Der Halterahmen 4 weist im Unterschied zum Druckstempel 14 im Ausführungsbeispiel nach Maßgabe der Fig. 1 einen Druckstempel 32 auf, der in Richtung der Längsachse 18 ein- und ausfahrbar ausgebildet ist, also auf die in der Darstellung der Fig. 2 nicht näher dargestellten Bauteile 6,7 gepresst und wieder von diesen abgehoben werden kann. Um den Druckstempel 32 ein- und ausfahren zu können ist ein weiterer Aktuator 33 vorhanden.

Zur Bearbeitung der Bauteile 6,7 mittels der Bearbeitungseinrichtung 15 wird der Halterahmen 4 mittels des Handhabungssystems 1 zunächst entsprechend positioniert und im Anschluss daran durch die Anbindungselemente 19,20, ähnlich wie vorstehend bereits im Rahmen der Beschreibung der Fig. 1 ausgeführt, auf die nicht näher dargestellte Bauteiloberfläche 8 aufgesetzt und auf dieser durch Evakuierung der Sauger 23,24 fixiert. Auf Grund der hier fehlenden zusätzlichen Bewegungsmöglichkeiten der Anbindungselemente 19,20 - infolge der nicht vorhandenen Aktuatoren 21,22 - ist bei dieser Ausführungsvariante des Halterahmens 4 keine bzw. nur eine eingeschränkte Anpassbarkeit an unterschiedliche Konturen der Bauteile 6,7 möglich.
Im Anschluss daran kann mittels des Aktuators 33 der Druckstempel 32 ausgefahren werden, der bei diesem Vorgang die Bauteile 6,7 zur Bearbeitung mittels der Bearbeitungseinrichtung 15 aneinander presst. Gleichzeitig wird durch das Ausfahren des Druckstempels 32 eine Verspannungskraft zwischen dem Druckstempel 32 und den Bauteilen 6,7 bzw. der Bauteiloberfläche 8 aufgebaut. Die Stützelemente 25,26 mit den Kunststoffelementen liegen hierbei auf der Bauteiloberfläche 8 auf und verhindern damit eine Verschiebung des Halterahmens 4 in Relation zur Bauteiloberfläche 8 infolge einer undefinierten Deformation der Sauger 23,24 infolge der Evakuierung sowie eine undefinierte Deformation der Sauger 23,24 durch etwaige vom Halterahmen 4 ausgehende Kräfte, die zu Positionierungsfehlern führen könnten.
Im Unterschied zu der Ausführungsform des Halterahmens 4 nach Maßgabe der Fig. 1 erfolgt der Aufbau der Verspannungskraft zwischen dem Halterahmen 4 und den Bauteilen 6,7 mangels der nicht vorhandenen Aktuatoren 21,22 hier allein durch die Betätigung des teleskopierbaren Druckstempels 32. Hierdurch ergibt sich zwar ein vereinfachter Aufbau des Halterahmens 4 bei einem gleichzeitig verringerten Gewicht, doch sind die Anbindungselemente 19,20 nicht so flexibel an unterschiedliche Oberflächengeometrien der Bauteile 6,7 anpassbar.

Mittels der als Bohrvorrichtung 16 ausgebildeten Bearbeitungseinrichtung 15 kann diese wiederum mittels des Aktuators 17 in Richtung der Bauteiloberfläche 8 zur Einbringung der gewünschten Bohrungen bewegt werden. Der Aktuator 17 erlaubt hierbei eine sehr genaue Variation der auf die Bohrvorrichtung 16 wirkenden Vorschubkräfte und Vorschubwege.

Der Aktuator 17 sowie der Aktuator 33 zur Bewegung des Druckstempels 32 können mit nicht näher dargestellten Kraftmesssensoren und/oder Wegmesssensoren ausgestattet sein, um die auftretenden Kräfte und Wege zu erfassen und beispielsweise die Steuerung der Vorschubgeschwindigkeit einer als Bohrvorrichtung 16 ausgebildeten Bearbeitungseinrichtung 15 entsprechend zu regeln.

Die **Fig. 3** zeigt eine Detaildarstellung des Halterahmens gemäß einer dritten Ausführungsvariante.

Der Halterahmen 4 ist im Befestigungspunkt 3 mit dem Handhabungssystem 1 verbunden. Im Unterschied zu der Ausführungsvariante nach Maßgabe der Fig. 2 weist diese Ausführungsvariante Anbindungselemente 19,20 auf, die wiederum mit den Aktuatoren 21,22- in Entsprechung zu der in Fig.1 dargestellten Ausführungsformin Relation zum Halterahmen 4 positionierbar sind. Die Anbindungselemente 19,20 sind als Sauger 23,24 ausgebildet. Die Sauger 23,24 sind mittels der Gelenke 29,30 gelenkig an den Kolbenstangen 27,28 angelenkt. In den Saugern 23,24 sind entsprechend zur ersten Ausführungsvariante die Stützelemente 25,26 angeordnet, an deren Enden sich wiederum jeweils ein Kunststoffelement zur Bildung einer Auflagefläche befindet. Hinter den Anbindungselementen 19,20 sind in Bezug auf die Zeichenebene nach hinten versetzt - und daher in der Darstellung der Fig. 3 verdeckt - weitere zwei Anbindungselemente mit Stützelementen über Gelenke am Halterahmen 4 in Entsprechung zur Anordnung der Anbindungselemente 19,20 befestigt (vgl. insb. Fig. 4).

Die Bearbeitungseinrichtung 15 bzw. die Bohrvorrichtung 16 sind ebenfalls entsprechend zur ersten Ausführungsvariante mittels des Aktuators 17 in Richtung der Längsachse 18 positionierbar. Darüber hinaus ist in dieser Ausführungsvariante zusätzlich der Druckstempel 32 mittels des Aktuators 33 in Richtung der Längsachse 18 positionierbar.

Auf Grund der gleichzeitig gegebenen Positionierbarkeit des Druckstempels 32 und der Anbindungselemente 19,20 mittels der Aktuatoren 17,21,22 und 33 ergeben sich im Vergleich zur ersten und zweiten Ausführungsvariante nach Maßgabe der Fig. 1 und der Fig. 2 erweiterte Bewegungsoptionen durch die Kombination der unabhängig voneinander gegebenen Verfahrmöglichkeiten der Anbindungselemente 19,20, der Druckstempel 14,32 sowie der Bearbeitungseinrichtung 15. Hinsichtlich der weiteren Beschreibung sei daher auf die bereits im Zusammenhang mit der Beschreibung der Fig. 1 und 2 gemachten Ausführungen verwiesen.

Die **Fig. 4** zeigt eine Draufsicht auf den Halterahmen gemäß der ersten Ausführungsvariante.

Der Halterahmen 4 ist im Befestigungspunkt 3 mit dem Handhabungssystem 1 fest verbunden. Am Halterahmen 4 sind die Anbindungselemente 19,20 sowie die in den Fig. 1 bis 3 nicht darstellbaren, hinten liegenden Anbindungselemente 34,35 jeweils in Eckbereichen des Halterahmens 4 angeordnet. Die vier Anbindungselemente 19,20 sowie 34,35 sind wiederum als Sauger 23,24 und 36,37 ausgebildet. Die vier Sauger 23,24,36,37 weisen entsprechend den vorstehend beschriebenen Ausführungsformen die Stützelemente 25,26 und 41,42 auf. Die vier Anbindungselemente 19,20,34,35 sind jeweils mittels der Aktuatoren 21,22,38,39 mit dem Halterahmen 4 verbunden und im Wesentlichen senkrecht zur Zeichenebene verfahrbar. Der Druckstempel 14 ist mittels der Stege 40 vorzugsweise ungefähr mittig innerhalb des Halterahmens 4 angeordnet. In etwa konzentrisch innerhalb des Druckstempels 14 ist schließlich die Bearbeitungseinrichtung 15 positioniert. Mittels des Aktuators 17 kann die Bearbeitungseinrichtung 15 senkrecht zur Zeichenebene positioniert werden. Von der gezeigten Positionierung abweichende Anordnungen des Druckstempels 14 sowie der Bearbeitungseinrichtung 15 am Halterahmen 4 sind gleichfalls möglich.

Abweichend vom gezeigten kreisförmigen Querschnitt des Druckstempels 14 ist eine alternative Gestaltung möglich, die die Bearbeitungseinrichtung 15 nur teilweise umschließt. In diesem Fall kann der Druckstempel 14 beispielsweise eine U-förmige Querschnittsgeometrie aufweisen. Der Halterahmen 4 kann darüber hinaus ebenfalls eine von der Darstellung der Fig. 4 abweichende geometrische Gestalt aufweisen. Der Halterahmen 4 kann beispielsweise rechteckförmig, kreisförmig, elliptisch oder in beliebigen Kombinationen hiervon ausgebildet sein.

Sämtliche zur Betätigung der erfindungsgemäßen Vorrichtung vorhandenen Aktuatoren 17,21,22,38,39 können beispielsweise als Hydraulik- oder Druckluftzylinder ausgebildet sein. Alternativ oder in Kombination können auch elektrisch oder hydraulisch betätigbare Spindelantriebe, Zahnstangenantriebe oder dergleichen vorgesehen sein. Weiterhin können die Aktuatoren 17,21,22,38,39 derart ausgebildet sein, dass diese eine Beweglichkeit in mehr als einer Raumrichtung bzw. einer Achse und jeweils mindestens einen Kraftmesssensor und/oder Wegmesssensor zur Erfassung der Position im Raum aufweisen.

Mittels der Steuer- und Regeleinrichtung 31 werden die Aktuatoren 17,21,22,38,39, die Sauger 23,24,36,37, die Druckstempel 14,32 sowie das Handhabungssystem 1 unter Berücksichtigung von Messwerten etwaiger mit den Aktuatoren 17,21,22,38,39 gekoppelter Kraftmesssensoren und/oder Wegmesssensoren gesteuert. Weiterhin dient die Steuer- und Regeleinrichtung 31 auch zur Steuerung des Unterdrucks in den Saugern 23,24,36,37.

Die Vorrichtung kann auch nur über mindestens zwei Anbindungselemente 19,20 verfügen. Der Einsatz von mindestens drei Anbindungselementen 19,20,34 ergibt aber einen festeren Sitz des Halterahmens 4 auf der Bauteiloberfläche 8, sodass der Halterahmen 4 insbesondere nicht mehr entlang einer Symmetrieachse verkippen kann und sich insgesamt ein stabilerer Bearbeitungsprozess ergibt.

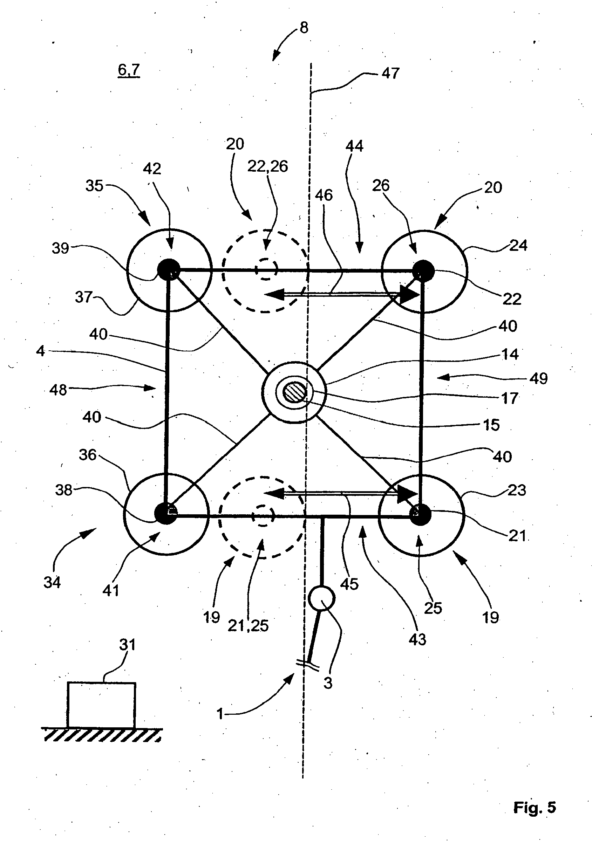

Die Fig. 5 zeigt eine weitere Ausführungsvariante des Halterrahmens 4 in einer Draufsicht.

In den vier Eckbereichen des Halterahmens 4 sind wiederum die als Sauger 23,24,36,37 ausgebildeten Anbindungselemente 19,20,34,35 angeordnet. Die Anbindungselemente 19,20,34,35 sind durch die Aktuatoren 21,22,38,39 im Wesentlichen senkrecht zur Zeichenebene verfahrbar. Mittels der Stege 40 sind der Druckstempel 14, die Bearbeitungseinrichtung 15 sowie der Aktuator 17 mit dem Halterahmen 4 verbunden. Die Bearbeitungseinrichtung 15 befindet sich hierbei in unmittelbarer Nähe eines Bauteilendes 47. Die Anbindungselemente 19,20,34,35 weisen entsprechend zur Ausführungsform nach Maßgabe der Fig. 4 die Stützelemente 25,26,41,42 auf. Der Halterahmen 4 ist im Befestigungspunkt 3 in bekannter Weise mit dem Handhabungssystem 1 verbunden.

Im Unterschied zu der Ausführungsvariante nach Maßgabe der Fig. 4 sind die Anbindungselemente 19,20 in Form der Sauger 23,24 einschließlich der Aktuatoren 21,22 entlang von Längsseiten 43,44 des Halterahmens 4 in Richtung der Pfeile 45,46 mittels nicht näher dargestellter Aktuatoren auf dem Halterahmen 4 verschiebbar ausgebildet. Die gestrichelt dargestellten Anbindungselemente 19,20 stehen für eine beispielhafte Verfahrposition der Anbindungselemente 19,20 einschließlich der Aktuatoren 21,22 sowie der Stützelemente 25,26. Die Anbindungselemente 19,20 werden hierbei so weit verschoben, dass diese noch vollständig auf der Bauteiloberfläche 8 aufliegen, um eine sichere Anbindung des Halterahmens 4 auf dieser zu gewährleisten. Diese Ausgestaltung ermöglicht eine sichere Anbindung des Halterahmens 4 durch die Anbindungselemente 19,20,34,35 auch für den Fall, dass eine Bearbeitung der Bauteile 6,7 in unmittelbarer Nähe des Bauteilendes 47 erfolgen soll. Darüber hinaus ermöglicht die Verschiebbarkeit der Anbindungselemente ein flexibleres Ausweichen für den Fall, dass in der Bewegungsbahn der erfindungsgemäßen Vorrichtung Bauteilstörstrukturen im Wege liegen. In einer nicht dargestellten, weiteren Ausführungsvariante ist es beispielsweise möglich alle Anbindungselemente 19,20,34,35 entlang der Längsseiten 43,44 und entlang von Längsseiten 48,49 des Halterahmens 4 jeweils individuell verschiebbar auszubilden. Mittels der Steuer- und Regeleinrichtung 31 werden die Bewegungsabläufe und die Positionen aller Aktuatoren kontrolliert und koordiniert.

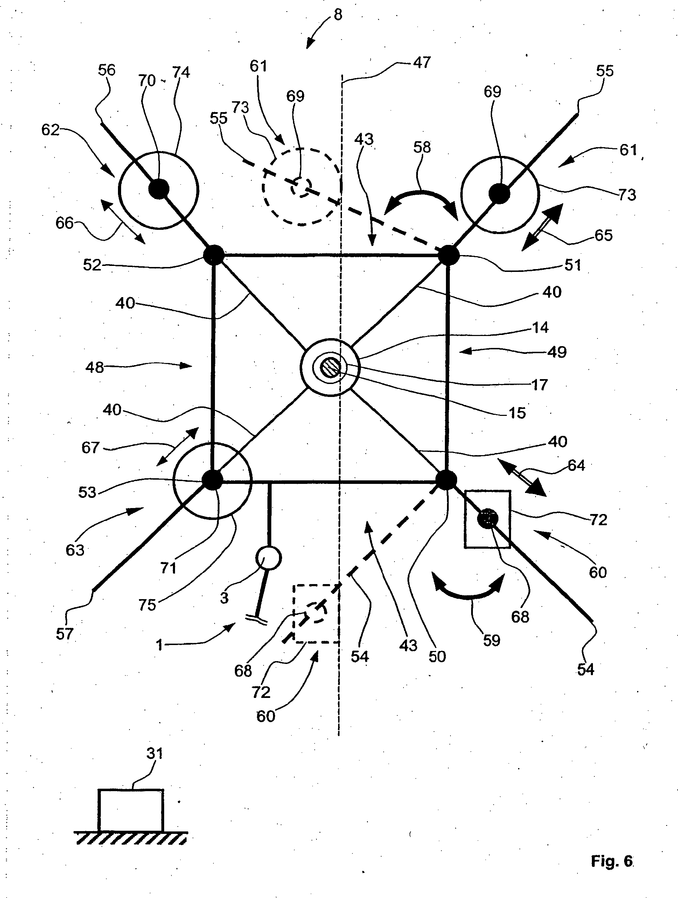

Die **Fig. 6** zeigt eine weitere Ausführungsvariante des Halterahmens 4 in einer Draufsicht.

Der Druckstempel 14, die Bearbeitungseinrichtung 15 sowie der Aktuator 17 sind entsprechend zu der vorstehend beschriebenen Ausführungsvariante ebenfalls über die Stege 40 mit dem Halterahmen 4 verbunden. Die Bearbeitungseinrichtung 15 befindet sich im Bereich des Bauteilendes 47. Der Halterahmen 4 ist in bekannter Weise im Befestigungspunkt 3 mit einem nicht dargestellten Handhabungssystem 1 verbunden. Der Halterahmen 4 bildet mit den Längsseiten 43,44,48,49 eine im Wesentlichen quadratische Anordnung. Abweichend hiervon sind auch rechteckförmige, vieleckige oder andere geometrische Anordnungen möglich. In vier Eckpunkten 50,51,52,53 des Halterahmens 4 ist jeweils ein Haltearm 54,55,56,57 angeordnet. Die Haltearme 54 und 55 sind, wie durch die Pfeile 58,59 angedeutet, mittels nicht dargestellter Aktuatoren verschwenkbar ausgebildet. In einer alternativen Ausführungsvariante können auch die Haltearme 56 und 57 um die Eckpunkte 52,53 verschwenkbar ausgebildet sein. Auf den Haltearmen 54 bis 57 sind Anbindungselemente 60,61,62,63 jeweils in Richtung der Pfeile 64,65,66,67 auf den Haltearmen 54 bis 57 mittels nicht dargestellter Aktuatoren verschiebbar ausgebildet. Die Anbindungselemente 60 bis 63 weisen die Aktuatoren 68,69,70,71 auf. Mittels der Aktuatoren 68 bis 71 sind die Anbindungselemente 60 bis 63 im Wesentlichen senkrecht zur Zeichenebene verschiebbar. Die Anbindungselemente 60 bis 63 sind als Sauger 72,73,74,75 ausgebildet, die jeweils über ein der besseren Übersicht halber nicht dargestelltes Stützelement verfügen. Die Stützelemente dienen, entsprechend zu den vorstehend beschriebenen Ausführungsvarianten des Halterahmens 4 (vgl. insb. Fig. 4 und 5), vor allem zur Abstützung der Anbindungselemente 60 bis 63 auf der Bauteiloberfläche 8. Die gestrichelt dargestellten Anbindungselemente 60,61 repräsentieren eine durch die Verschwenkung der Haltearme 54,55 eingenommene, beispielhafte Position der Anbindungselemente 60,61 im Bereich des Bauteilendes 47. Die Haltearme 54 werden hierbei so weit verschwenkt, dass die Anbindungselemente 60,61 gerade vollständig auf der Bauteiloberfläche 8 aufliegen, um eine noch sichere Anbindung des Halterahmens 4 zu gewährleisten. In dieser Position können die Bauteile 6,7 auch im Bereich des Bauteilendes 47 mittels der Bearbeitungseinrichtung 15 bearbeitet werden, da eine sichere Anbindung des Halterahmens 4 mittels der verschwenkten Anbindungselemente 60,61 sowie der Anbindungselemente 62,63 noch möglich ist. Darüber hinaus ermöglicht die Verschwenkbarkeit der Anbindungselemente ein flexibleres Ausweichen im Fall des Auftretens von Bauteilstörstrukturen.

In Abweichung zu den vorstehend beschriebenen Ausführungsformen von Saugern ist der Sauger 72 des Anbindungselementes 60 hier rechteckförmig ausgebildet. Die rechteckförmige Gestalt des Saugers 72 erlaubt in der gestrichelt dargestellten Verschwenkungsposition des Anbindungselementes 60 eine noch nähere Positionierung des Saugers 72 in Bezug auf das Bauteilende 47 und damit eine Bearbeitung der Bauteile 6,7 mit der Bearbeitungseinrichtung 15 in unmittelbarer Nähe des Bauteilendes 47. Im Vergleich zu den kreisförmigen Saugern 73,74,75 erlaubt der rechteckförmige Sauger 72 eine weitere Minimierung des Abstandes zum Bauteilende 47. Die übrigen Sauger 73 bis 75 können erforderlichenfalls ebenfalls rechteckförmig, quadratisch oder in jeder beliebigen, zur Abstandsminimierung geeigneten, von der Kreisform abweichenden geometrischen Gestalt ausgebildet sein. Mittels der Steuer- und Regeleinrichtung 31 werden wiederum die Bewegungen und Positionen sämtlicher Aktuatoren kontrolliert und koordiniert.

Die **Fig. 7** zeigt eine perspektivische Ansicht eines Druckstempels.

Der Druckstempel 14 drückt die Bauteile 6,7 zur Bearbeitung nieder. Etwaige Heftmittel sind der Übersichtlichkeit halber nicht dargestellt. Der Druckstempel 14 ist im Wesentlichen hohlzylindrisch ausgebildet und umschließt die Bearbeitungseinrichtung 15 bzw. die Bohrvorrichtung 16 entlang ihrer Längsachse 18 teilweise.

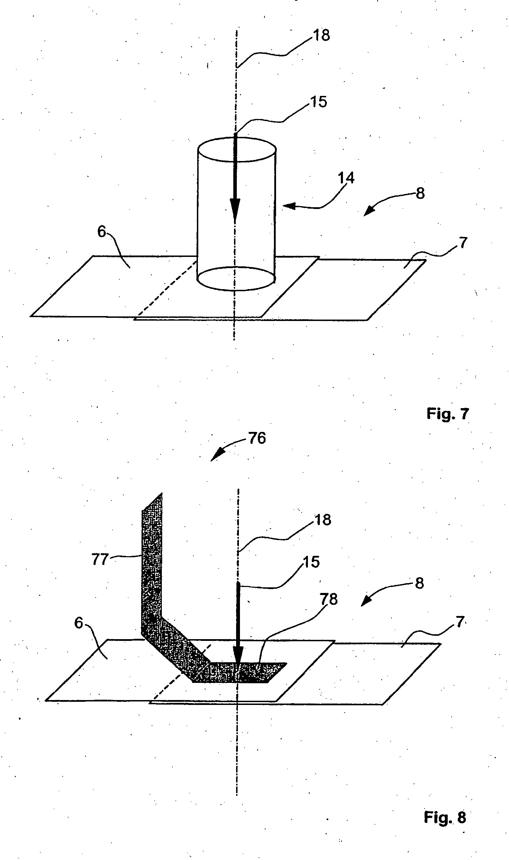

Die **Fig. 8** zeigt eine Ausführungsvariante eines Druckstempels.

Ein Druckstempel 76 ist im Wesentlichen L-förmig ausgebildet. Der Druckstempel 76 weist unter anderem eine Halterung 77 auf. Eine Andruckfläche 78 ist in etwa senkrecht zur Halterung 77 an deren unteren Ende angeordnet. Die Andruckfläche 78 verläuft in etwa parallel zur Bauteiloberfläche 8 bzw. zu den Bauteilen 6,7. Mittels der Andruckfläche 78 drückt der Druckstempel 76 die Bauteile 6,7 zur Bearbeitung aneinander. Etwaige Heftmittel sind der Übersichtlichkeit halber nicht dargestellt. Damit die Bearbeitungseinrichtung 15 die Bauteiloberfläche 8 entlang der Längsachse 18 erreichen bzw. die Andruckfläche 78 durchdringen kann, weist die Andruckfläche 78 entsprechende, in der Fig. 6 nicht näher dargestellte Ausnehmungen zum Durchführen der Bearbeitungseinrichtung 15 auf. Auch der Druckstempel 76 ist mittels der Steuer- und Regeleinrichtung (vgl. Fig. 1, 4) kontrollierbar. Weitere Ausgestaltungen für Druckstempel 14,32,76 sind denkbar.

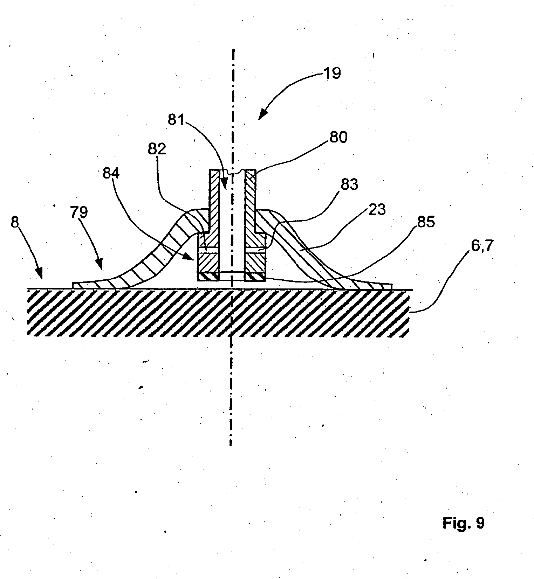

Die **Fig. 9** zeigt am Beispiel des Anbindungselements 19 einen Querschnitt durch einen kreisförmigen Sauger. Die nachfolgenden Ausführungen gelten entsprechend für Sauger mit einer rechteckförmigen oder anderen geometrischen Form.

Das Anbindungselement 19 weist den Sauger 23 auf. Der Sauger 23 ist mit einem elastischen Kunststoffmaterial gebildet, das eine rückstandsfreie Ablösung von der Bauteiloberfläche 8 gewährleistet. Der Sauger 23 weist im Wesentlichen eine topfförmige geometrische Gestalt auf. Mit einer kreisrunden Randbereichsfläche 79 liegt der Sauger auf der Bauteiloberfläche 8 bzw. einem der Bauteile 6,7 auf. Im oberen Bereich des Saugers 23 ist ein Befestigungsmittel 80 fest mit diesem verbunden. Das Befestigungsmittel 80 dient zur Anbindung des Saugers 23 an weitere, nicht näher dargestellte Organe, beispielsweise Aktuatoren oder dergleichen. Das Befestigungsmittel 80 weist weiterhin eine Bohrung 81 auf. Mittels der Bohrung 81 kann innerhalb des Saugers 23 über weitere Luftbohrungen 82,83 ein Unterdruck aufgebaut werden oder aber Druckluft in diesen eingeblasen werden. Durch das Einblasen von Druckluft in den Sauger 23 lässt sich dieser sehr schnell und vor allem kraftlos wieder von der Bauteiloberfläche 8 abheben.

An seinem unteren, zur Bauteiloberfläche 8 hinweisenden Ende ist das Befestigungsmittel 80 als ein Stützelement 84 bzw. funktionsmäßig als ein "Stützfuß" bzw. als so genannter "Hardpoint" ausgebildet. Das Stützelement 84 weist aus Gründen des Oberflächenschutzes der Bauteiloberfläche 8 sowie wegen der erforderlichen Rutschsicherheit am unteren Ende ein Auflageelement 85 aus einem geeigneten Material, insbesondere einem Kunststoffmaterial, das eine rückstandsfreie Ablösung von der Bauteiloberfläche 8 gewährleistet, auf. In Abhängigkeit von der Steifigkeit des zur Bildung des Auflageelementes 85 eingesetzten Kunststoffmaterials führt ein Andrücken des Saugers 23 vor dessen Evakuierung zu unterschiedlich großen auf die Bauteiloberfläche 8 und das Handhabungssystem 1 wirkenden Kräften. Sind diese Kräfte hinreichend klein, kann der Sauger 23 auch bis zum Anliegen des Auflageelementes 85 bzw. des aus dem Stützelement 84 und der Auflagefläche 85 gebildeten "Hardpoints" an die Bauteiloberfläche 8 angedrückt werden.

Das Stützelement 84 in Verbindung mit dem Auflageelement 85 verhindert im evakuierten Zustand des Saugers 23 eine undefinierte Verformung desselben, weil der vertikale Verformungsweg des Saugers 23 senkrecht zur Bauteiloberfläche durch das Stützelement 84 bzw. das Auflageelement 85 begrenzt wird. Daneben werden Verformungen des Saugers 23 durch vom Halterahmen 4 ausgehende Kräfte vermieden, da diese direkt vom Stützelement 84 in Verbindung mit dem Auflageelement 85 auf die Bauteiloberfläche 8 abgeleitet werden. Damit werden etwaige Verschiebungen des zumindest teilweise aus einem flexiblen Kunststoffmaterial gebildeten Saugers 23 in Bezug auf die Bauteiloberseite 8, die unter Umständen zu Positionierungsfehlern zwischen dem Befestigungsmittel 80 und der Bauteiloberfläche 8 führen können, verringert.

### Bezugszeichenliste

- 1: Handhabungssystem
- 2: Widerlager
- 3: Befestigungspunkt
- 4: Halterahmen
- 5: Knickarmroboter
- 6: Bauteil
- 7: Bauteil
- 8: Bauteiloberfläche
- 9: Überlappungsbereich
- 10: Heftelement
- 11: Heftelement
- 12: Widerlager
- 13: Widerlager
- 14: Druckstempel
- 15: Bearbeitungseinrichtung
- 16: Bohrvorrichtung
- 17: Aktuator
- 18: Längsachse
- 19: Anbindungselement
- 20: Anbindungselement
- 21: Aktuator
- 22: Aktuator
- 23: Sauger
- 24: Sauger
- 25: Stützelement
- 26: Stützelement
- 27: Kolbenstange
- 28: Kolbenstange
- 29: Gelenk
- 30: Gelenk
- 31: Steuer- und Regeleinrichtung
- 32: Druckstempel
- 33: Aktuator
- 34: Anbindungselement
- 35: Anbindungselement
- 36: Sauger
- 37: Sauger
- 38: Aktuator
- 39: Aktuator
- 40: Steg
- 41: Stützelement
- 42: Stützelement
- 43: Längsseite
- 44: Längsseite
- 45: Pfeil
- 46: Pfeil
- 47: Bauteilende
- 48: Längsseite
- 49: Längsseite
- 50: Eckpunkt
- 51: Eckpunkt
- 52: Eckpunkt
- 53: Eckpunkt
- 54: Haltearm
- 55: Haltearm
- 56: Haltearm
- 57: Haltearm
- 58: Pfeil
- 59: Pfeil
- 60: Anbindungselement
- 61: Anbindungselement
- 62: Anbindungselement
- 63: Anbindungselement
- 64: Pfeil
- 65: Pfeil
- 66: Pfeil
- 67: Pfeil
- 68: Aktuator
- 69: Aktuator
- 70: Aktuator
- 71: Aktuator
- 72: Sauger
- 73: Sauger
- 74: Sauger
- 75: Sauger
- 76: Druckstempel
- 77: Halterung
- 78: Andruckfläche
- 79: Randbereichsfläche
- 80: Befestigungsmittel
- 81: Bohrung
- 82: Luftbohrung
- 83: Luftbohrung
- 84: Stützelement
- 85: Auflageelement

## Patentansprüche

1. Vorrichtung zur Bearbeitung von Bauteilen (6, 7) für Verkehrsmittel, insbesondere zur Bearbeitung von Sektionen für Luftfahrzeuge, mit einem einen Halterahmen (4) tragenden Handhabungssystem (1), wobei der Halterahmen (4) mindestens einen Druckstempel (14,32,76) und/oder mindestens eine Bearbeitungseinrichtung (15) aufweist,
**dadurch gekennzeichnet, dass** im Bereich des Halterahmens (4) mindestens ein kraftschlüssig wirkendes Anbindungselement (19, 20, 34, 35, 60-63) zum Verbinden mit einer Bauteiloberfläche angeordnet ist, der Halterahmen (4) mittels des Handhabungssystems (1) in Bezug auf die Bauteiloberfläche (8) frei im Raum positionierbar ist, keine bauteilseitigen Anbindungshilfen zur Bearbeitung erforderlich sind und die Vorrichtung dazu eingerichtet ist, die Bauteile (6, 7) ohne Innensysteme zu deren Abstützung zu bearbeiten, wobei sich das mindestens eine Anbindungselement (19, 20, 34, 35,60-63) selbständig an die Kontur des zu bearbeitenden Bauteils (6, 7) anpasst.

2. Vorrichtung nach Anspruch 1, **dadurch gekennzeichnet, dass** mindestens ein Anbindungselement (19, 20, 34, 35, 60-63) kraftschlüssig mit einer Bauteiloberfläche (8) verbindbar und lösbar ausgebildet ist, um die durch die mindestens eine Bearbeitungseinrichtung (15) und/oder durch den mindestens einen Druckstempel (14, 32, 76) auf das Handhabungssystem (1) wirkenden Reaktionskräfte durch Ableitung auf die Bauteiloberfläche (8) zu minimieren.

3. Vorrichtung nach Anspruch 1 oder 2, **dadurch gekennzeichnet, dass** mindestens ein Druckstempel (14, 32, 76) wenigstens einen Aktuator (33) aufweist, um eine Positionierung relativ zum Halterahmen (4) zu ermöglichen.

4. Vorrichtung nach einem der Ansprüche 1 bis 3, **dadurch gekennzeichnet, dass** mindestens ein Anbindungselement (19, 20, 34, 35, 60-63) wenigstens einen Aktuator (21, 22, 38, 39, 68-71) aufweist, um eine Positionierung relativ zum Halterahmen (4) zu ermöglichen.

5. Vorrichtung nach einem der Ansprüche 1 bis 4, **dadurch gekennzeichnet, dass** mindestens eine Bearbeitungseinrichtung (15) wenigstens einen Aktuator (17) aufweist, um eine Positionierung relativ zum Halterahmen (4) zu ermöglichen.

6. Vorrichtung nach einem der Ansprüche 1 bis 5, **dadurch gekennzeichnet, dass** mindestens ein Druckstempel (14, 32, 76) und/oder mindestens ein Anbindungselement (19, 20, 34, 35, 60-63) wenigstens einen Kraftmesssensor und/oder Wegmesssensor aufweist.

7. Vorrichtung nach einem der Ansprüche 1 bis 6, **dadurch gekennzeichnet, dass** das Anbindungselement oder die Anbindungselemente (19, 20, 34, 35, 60-63) vorzugsweise in etwa gleichmässig zueinander beabstandet über eine Umfangskontur des Halterahmens (4) verteilt angeordnet sind.

8. Vorrichtung nach einem der Ansprüche 1 bis 7, **dadurch gekennzeichnet, dass** der Halterahmen (4) eine vieleckige geometrische Gestaltung mit insbesondere vier Längsseiten (43,44,48,49) aufweist.

9. Vorrichtung nach einem der Ansprüche 1 bis 8, **dadurch gekennzeichnet, dass** mindestens zwei Anbindungselemente (19, 20, 34, 35, 60-63) auf den Längsseiten (43, 44, 48, 49) verschiebbar ausgebildet sind, um eine Bearbeitung der Bauteile (6, 7) im Bereich eines Bauteilendes (47) zu ermöglichen.

10. Vorrichtung nach einem der Ansprüche 1 bis 9, **dadurch gekennzeichnet, dass** der Halterahmen (4) mindestens zwei verschwenkbare Haltearme (54, 55, 56, 57) aufweist, wobei das oder die Anbindungselemente (19, 20, 34, 35, 60-63) auf den Haltearmen (54, 55, 56, 57) verschiebbar angeordnet sind, um eine Bearbeitung der Bauteile (6,7) im Bereich des Bauteilendes (47) zu ermöglichen.

11. Vorrichtung nach einem der Ansprüche 1 bis 10 **dadurch gekennzeichnet, dass** mindestens ein Druckstempel (14, 32, 76) innerhalb des Halterahmens (4) angeordnet ist.

12. Vorrichtung nach einem der Ansprüche 1 bis 11 **dadurch gekennzeichnet, dass** mindestens eine Bearbeitungseinrichtung (15) innerhalb wenigstens eines Druckstempels (14, 32, 43) angeordnet ist.

13. Vorrichtung nach einem der Ansprüche 1 bis 12, **dadurch gekennzeichnet, dass** mindestens ein Anbindungselement (19, 20, 34, 35, 60-63) einen Sauger (23, 24, 36, 37, 72-75) aufweist.

14. Vorrichtung nach einem der Ansprüche 1 bis 13, **dadurch gekennzeichnet, dass** mindestens eine Bearbeitungseinrichtung (15) innerhalb wenigstens eines Saugers (23, 24, 36, 37, 72-75) angeordnet ist.

15. Vorrichtung nach einem der Ansprüche 1 bis 14, **dadurch gekennzeichnet, dass** mindestens eine Bearbeitungseinrichtung (15) wenigstens ein Mittel zur spanenden Bearbeitung der Bauteile (6, 7), insbesondere eine Bohrvorrichtung (16) und/oder eine Fräsvorrichtung aufweist.

16. Vorrichtung nach einem der Ansprüche 1 bis 15, **dadurch gekennzeichnet, dass** mindestens eine Bearbeitungseinrichtung (15) wenigstens ein Mittel zum Fügen der Bauteile (6, 7), insbesondere eine Nietvorrichtung, eine Schweissvorrichtung, eine Pressvorrichtung, eine Klemmvorrichtung, eine Klebevorrichtung oder dergleichen aufweist.

17. Vorrichtung nach einem der Ansprüche 1 bis 16, **dadurch gekennzeichnet, dass** mindestens eine Bearbeitungseinrichtung (15) mindestens ein Mittel zur Oberflächenbearbeitung der Bauteile (6, 7), insbesondere eine Schleif- und/oder Poliervorrichtung aufweist.

18. Vorrichtung nach einem der Ansprüche 1 bis 17, **dadurch gekennzeichnet, dass** die Vorrichtung eine Steuer- und Regeleinrichtung (31), insbesondere zur Kontrolle des Handhabungssystems (1), der Druckstempel (14, 32, 76), der Bearbeitungseinrichtung (15) sowie der Aktuatoren (17, 21, 22, 33, 38, 39, 68-71) aufweist.

19. Vorrichtung nach einem der Ansprüche 1 bis 18, **dadurch gekennzeichnet, dass** das Handhabungssystem (1) wenigstens einen Standard-Industrieroboter, insbesondere einen Knickarmroboter (5), aufweist.

## Claims

1. A device for processing components (6, 7) for means of transport, in particular for processing sections for aircraft, the device comprising a handling system (1) supporting a holding frame (4), wherein the holding frame comprises at least one pressure stamp (14, 32, 76) and/or at least one processing unit (15),
**characterized in that** in the region of the holding frame (4) at least one non-positively acting connection element (19, 20, 34, 35, 60-63) for connecting with a component surface is arranged, the holding frame (4) is freely positionable in space in relation to the component surface (8) by means of the handling system (1), no connection aids on the component side are necessary for the processing and the device is adapted for processing the components (6, 7) without interior systems for their support, wherein the at least one connecting element (19, 20, 34, 35, 60-63) adapts itself to the contour of the component (6, 7) to be processed.

2. The device of claim 1, **characterized in that** at least one connection element (19, 20, 34, 35, 60-63) is designed so as to be non-positively connectable to and detachable from a component surface (8) so as to minimise reaction forces which act on the handling system (1) by the at least one processing unit (15) and/or by the at least one pressure stamp (14, 32, 76), by deflection to the component surface (8).

3. The device of claim 1 or 2, **characterized in that** at least one pressure stamp (14, 32, 76) comprises at least one actuator (33) in order to make possible positioning relative to the holding frame (4).

4. The device of any of the claims 1 to 3, **characterized in that** at least one connection element (19, 20, 34, 35, 60-63) comprises at least one actuator (21, 22, 38, 39, 68-71) in order to allow positioning relative to the holding frame (4).

5. The device of any of the claims 1 to 4, **characterized in that** at least one processing unit (15) comprises at least one actuator (17) in order to make possible positioning relative to the holding frame (4).

6. The device of any of the claims 1 to 5, characterized at least one pressure stamp (14, 32, 76) and/or at least one connection element (19, 20, 34, 35, 60-63) comprises at least one force sensor and/or distance measuring sensor.

7. The device of any of the claims 1 to 6, **characterized in that** the connection element or the connection elements (19, 20, 34, 35, 60-63) are arranged around a circumferential contour of the holding frame so as to be essentially evenly spaced apart from each other.

8. The device of any of the claims 1 to 7, **characterized in that** the holding frame (4) comprises a polygonal geometric shape, in particular comprising four longitudinal sides (43, 44, 48, 49).

9. The device of any of the claims 1 to 8, **characterized in that** at least two connection elements (19, 20, 34, 35, 60-63) are slidably arranged on the longitudinal sides (43, 44, 48, 49) so as to make it possible to process the components (6, 7) in a region of an end (47) of a component.

10. The device of any of the claims 1 to 9, **characterized in that** the holding frame (4) comprises at least two slewable holding arms (54, 55, 56, 57), wherein the connection element or the connection elements (19, 20, 34, 35, 60-63) are slidably arranged on the holding arms (54, 55, 56, 57) so as to make it possible to process the components (6, 7) in a region of an end (47) of a component.

11. The device of any of the claims 1 to 10, **characterized in that** at least one pressure stamp (14, 32, 76) is arranged within the holding frame (4).

12. The device of any of the claims 1 to 11, **characterized in that** at least one processing unit (15) is arranged within at least one pressure stamp (14, 32, 43).

13. The device of any of the claims 1 to 12, **characterized in that** at least one connection element (19, 20, 34, 35, 60-63) comprises a suction device.

14. The device of any of the claims 1 to 13, **characterized in that** at least one processing unit (15) is arranged within at least one suction device (23, 24, 36, 37, 72, 75).

15. The device of any of the claims 1 to 14, **characterized in that** at least one processing unit (15) comprises at least one means for processing the components (6, 7) by way of material-cutting, in particular a drilling device (16) and/or a milling device.

16. The device of any of the claims 1 to 15, **characterized in that** at least one processing unit (15) comprises at least one means for joining the components (6, 7), in particular a riveting device, a welding device, a pressing device, a clamping device, a gluing device and the such.

17. The device of any of the claims 1 to 16, **characterized in that** at least one processing unit (15) comprises at least one means for surface processing the components (6, 7), in particular a grinding device and/or a polishing device.

18. The device of any of the claims 1 to 17, **characterized in that** the device comprises a control and/or regulating device (31), in particular to control the handling system (1), the pressure stamps (14, 32, 76), the processing unit (15) and the actuators (17, 21, 22, 33, 38, 39, 68-71).

19. The device of any of the claims 1 to 18, **characterized in that** the handling system (1) comprises at least one standard industrial robot, in particular an arm robot (5).

## Revendications

1. Dispositif d'usinage de pièces structurales (6, 7) pour des moyens de transport, en particulier pour l'usinage de sections pour des aéronefs, comportant un système de manutention (1) portant un cadre de support (4), le cadre de support (4) présentant au moins un piston-chasse (14, 32, 76) et/ou au moins un moyen d'usinage (15),
**caractérisé en ce que**, au niveau du cadre de support (4), au moins un élément de liaison (19, 20, 34, 35, 60-63) agissant par complémentarité de force est disposé pour relier une surface de la pièce structurale, le cadre de support (4) est positionnable librement dans l'espace par rapport à la surface (8) de la pièce structurale au moyen du système de manutention (1), aucune assistance de liaison du côté de la pièce structurale n'est nécessaire pour l'usinage et le dispositif est agencé en place pour usiner les pièces structurales (6, 7) sans systèmes intérieurs par rapport à leur appui, dans lequel l'au moins un élément de liaison (19, 20, 34, 35, 60-63) s'adapte automatiquement au contour de la pièce structurale (6, 7) à usiner.

2. Dispositif selon la revendication 1, **caractérisé en ce qu'**au moins un élément de liaison (19, 20, 34, 35, 60-63) est réalisé de manière à pouvoir être relié à une surface (8) de la pièce structurale et détaché de celle-ci par complémentarité de force, afin de minimiser les forces de réaction qui agissent sur le système de manutention (1) par l'intermédiaire de l'au moins un moyen d'usinage (15) et/ou de l'au moins un piston-chasse (14, 32, 76), par le biais d'une dérivation sur la surface (8) de la pièce structurale.

3. Dispositif selon la revendication 1 ou 2, **caractérisé en ce qu'**au moins un piston-chasse (14, 32, 76) présente au moins un actionneur (33), afin de permettre un positionnement par rapport au cadre de support (4).

4. Dispositif selon une des revendications 1 à 3, **caractérisé en ce qu'**au moins un élément de liaison (19, 20, 34, 35, 60-63) présente au moins un actionneur (21, 22, 38, 39, 68-71), afin de permettre un positionnement par rapport au cadre de support (4).

5. Dispositif selon une des revendications 1 à 4, **caractérisé en ce qu'**au moins un moyen d'usinage (15) présente au moins un actionneur (17), afin de permettre un positionnement par rapport au cadre de support (4).

6. Dispositif selon une des revendications 1 à 5, **caractérisé en ce qu'**au moins un piston-chasse (14, 32, 76) et/ou moins un élément de liaison (19, 20, 34, 35, 60-63) présente au moins un capteur de mesure de force et/ou un capteur de mesure de distance.

7. Dispositif selon une des revendications 1 à 6, **caractérisé en ce que** l'élément ou les éléments de liaison (19, 20, 34, 35, 60-63) sont de préférence à peu près régulièrement répartis à distance les uns des autres sur un contour circonférentiel du cadre de support (4).

8. Dispositif selon une des revendications 1 à 7, **caractérisé en ce que** le cadre de support (4) présente une configuration géométrique polygonale qui comporte en particulier quatre côtés longitudinaux (43, 44, 48, 49).

9. Dispositif selon une des revendications 1 à 8, **caractérisé en ce qu'**au moins deux éléments de liaison (19, 20, 34, 35, 60-63) sont réalisés déplaçables sur les côtés longitudinaux (43, 44, 48, 49), afin de permettre un usinage des pièces structurales (6, 7) au niveau d'une extrémité (47) des pièces structurales.

10. Dispositif selon une des revendications 1 à 9, **caractérisé en ce que** le cadre de support (4) présente au moins deux bras de retenue pivotants (54, 55, 56, 57), le ou les éléments de liaison (19, 20, 34, 35, 60-63) étant disposés déplaçables sur les bras de retenue (54, 55, 56, 57), afin de permettre un usinage des pièces structurales (6, 7) au niveau de l'extrémité (47) des pièces structurales.

11. Dispositif selon une des revendications 1 à 10 **caractérisé en ce qu'**au moins un piston-chasse (14, 32, 76) est disposé à l'intérieur du cadre de support (4).

12. Dispositif selon une des revendications 1 à 11 **caractérisé en ce qu'**au moins un moyen d'usinage (15) est disposé à l'intérieur d'au moins un piston-chasse (14, 32, 43).

13. Dispositif selon une des revendications 1 à 12, **caractérisé en ce qu'**au moins un élément de liaison (19, 20, 34, 35, 60-63) présente un aspirateur (23, 24, 36, 37, 72-75).

14. Dispositif selon une des revendications 1 à 13, **caractérisé en ce qu'**au moins un moyen d'usinage (15) est disposé à l'intérieur d'au moins un aspirateur (23, 24, 36, 37, 72-75).

15. Dispositif selon une des revendications 1 à 14, **caractérisé en ce qu'**au moins un moyen d'usinage (15) présente au moins un moyen d'usinage des pièces structurales (6, 7) par enlèvement de copeaux, en particulier un dispositif à percer (16) et/ou un dispositif à fraiser.

16. Dispositif selon une des revendications 1 à 15, **caractérisé en ce qu'**au moins un moyen d'usinage (15) présente au moins un moyen d'assemblage des pièces structurales (6, 7), en particulier une machine à riveter, une machine à souder, un dispositif à comprimer, un dispositif à serrer, un dispositif à coller ou similaire.

17. Dispositif selon une des revendications 1 à 16, **caractérisé en ce qu'**au moins un moyen d'usinage (15) présente au moins un moyen de traitement de surface des pièces structurales (6, 7), en particulier un dispositif à rectifier et/ou à polir.

18. Dispositif selon une des revendications 1 à 17, **caractérisé en ce que** le dispositif présente un moyen de commande et de réglage (31), en particulier pour contrôler le système de manutention (1), le piston-chasse (14, 32, 76), le moyen d'usinage (15) ainsi que les actionneurs (17, 21, 22, 33, 38, 39, 68-71).

19. Dispositif selon une des revendications 1 bis 18, **caractérisé en ce que** le système de manutention (1) présente au moins un robot industriel standard, en particulier un robot à bras articulé (5).
